# EUROPÄISCHE PATENTSCHRIFT

(11) **EP 3 675 675 B1**
(45) Veröffentlichungstag und Bekanntmachung des Hinweises auf die Patenterteilung: **09.10.2024**
(21) Anmeldenummer: 18758899.1
(22) Anmeldetag: 30.08.2018
(51) Int. Cl.: A43B 17/00, B29D 99/00, B29C 65/00, B32B 37/00, B32B 37/06

(54) **VERFAHREN ZUM VERSCHWEISSEN VON PORÖSEN MEMBRANEN UND PRODUKT**
METHOD FOR WELDING POROUS MEMBRANES AND PRODUCT
PROCÉDÉ DE SOUDAGE DE MEMBRANES POREUSES ET PRODUIT

(30) Priorität: 01.09.2017 EP 17189070
(43) Veröffentlichungstag der Anmeldung: 08.07.2020
(73) Patentinhaber: BASF SE, 67069 Ludwigshafen am Rhein (DE)
(72) Erfinder: WEBER, Martin, 67056 Ludwigshafen am Rhein (DE); AHLERS, Jürgen, 67056 Ludwigshafen am Rhein (DE); PRISSOK, Frank, 49448 Lemförde (DE); GRONWALD, Oliver, 67056 Ludwigshafen am Rhein (DE)
(74) Vertreter: BASF IP Association
(86) Internationale Anmeldenummer: PCT/EP2018/073352
(87) Internationale Veröffentlichungsnummer: WO 2019/043100

(56) Entgegenhaltungen:
- EP-A1- 3 100 849
- WO-A1-2016/061321
- GB-A- 2 496 244

## Beschreibung

Die vorliegende Erfindung betrifft ein Verfahren zum Verschweißen von porösen Membranen, umfassend das Bereitstellen einer ersten porösen Membran und einer zweiten porösen Membran; das zumindest anteilige Überlagern von erster und zweiter poröser Membran unter Erhalt eines zumindest anteiligen Überlagerungsbereichs; sowie das Verschweißen von erster und zweiter poröser Membran zumindest in einem Teil des Überlagerungsbereichs bei einer Temperatur im Bereich von 100 bis 250 °C unter Erhalt eines zumindest anteilig verschweißten Verbunds aus erster und zweiter poröser Membran, wobei das Material der ersten und der zweiten porösen Membran ein thermoplastisches Elastomer umfasst, ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere, wobei erste und zweite poröse Membran Poren mit einem mittleren Porendurchmesser kleiner als 2000 nm, bestimmt mittels Hg-Porosimetrie gemäß DIN 66133, aufweisen, wobei erste und zweite poröse Membran zumindest in einem Teil des Überlagerungsbereichs miteinander in Form einer Schweißnaht verbunden sind. Weiterhin betrifft die Erfindung einen verschweißten Verbund aus einer ersten und zweiten porösen Membran, erhalten oder erhältlich nach dem erfindungsgemäßen Verfahren, wobei erste und zweite poröse Membran zumindest in einem Teil des Überlagerungsbereichs miteinander in Form einer Schweißnaht verbunden sind, sowie die Verwendung eines verschweißten Verbunds zur Herstellung eines Artikels ausgewählt aus der Gruppe bestehend aus Bekleidung, Schuh, Stiefel, Schutzanzug, Zelt und Plane.

Wasserfeste, atmungsaktive Bekleidung und Schuhe enthalten normalerweise als funktionale Schicht expandiertes Polytetrafluorethylen (ePTFE) (US 3,953,566, US 3,962,153) oder Polyester (Sympatex) (US 5,562,977) in Form von Membranen oder dünnen Filmen. Bekannt sind auch nicht-poröse Beschichtungen aus thermoplastischem Polyurethan auf Textilien (JP 5005276). Weiter betrifft EP 3100849 A1 ein Verfahren zur Herstellung eines textilen Komposit-Elements, in welchem eine Gewebeschicht (11) und eine Membran (12) aufeinandergestapelt und unter Anwendung von Druck und Wärme miteinander verbunden werden, wobei die Gewebeschicht (11) aus einem thermoplastischen Elastomer bzw. Polymer besteht, dieses aber in Form verwobener Fäden vorliegt. GB 2496244 A offenbart ein Gewebelaminat, welches eine kalandrierte heißluftgezogene Schicht 22 und mindestens eine nach dem Spinnvliesverfahren hergestellte Schicht 24, 26 umfasst. WO 2016/061321 A1 offenbart eine Laminiermaschine und einen Laminierprozess zum Laminieren einer Membran auf eine dreidimensionale (3D) Zieloberfläche eines Artikels, wie etwa eines Fußbekleidungsartikels, Handschuhs, Bekleidungsartikels, Rucksacks oder eines anderen Artikels. Die Membran und die Zieloberfläche können auf der ersteren angeordnet sein, wobei ein wärmeaktivierbarer Klebstoff zwischen der Membran und der Zieloberfläche angeordnet ist. EP 2476324 A1 beschreibt einen Sanitärartikel - wasserdichte, feuchtigkeitsdurchlässige Unterwäsche - bei welcher zwei Membranen direkt miteinander überlagert und verschweißt werden. Problematisch dabei ist, dass meist das Annähen der funktionalen Schicht auf das Trägermaterial erforderlich ist, wobei die Nahtstiche das Material der funktionalen Schicht wasserdurchlässig werden lassen (US 2015/0230563). Daher muss die Wasserbeständigkeit üblicherweise anschließend durch Versiegeln der Naht mit einem darüber liegenden Adhäsiv oder einem Dichtungsband hergestellt werden, wobei das Verschließen mittels Bindungs- oder Schweißprozess erfolgt. Alternativen zum Annähen sind bisher nicht bekannt bzw. Methoden wie beispielsweise eine flächige Verklebung bringen Nachteile mit sich, so verlieren die funktionalen Materialen durch eine flächige Verklebung ihre Atmungsfähigkeit und es kommt im Laufe der Zeit zu Ablösungserscheinungen etc..

Aufgabe der Erfindung war daher die Bereitstellung eines Verfahrens, welches das Verbinden von atmungsaktiven, aber wasserfesten Materialien erlaubt, ohne dass diese Materialien dabei diese vorteilhaften Eigenschaften verlieren, insbesondere sollte ein Verfahren bereitgestellt werden, welches das Verbinden dieser Materialien ohne Einsatz von Nahtstichen erlaubt, wiederrum unter Erhalt der vorteilhaften Eigenschaften der Materialien.

Erfindungsgemäß wird diese Aufgabe durch ein Verfahren zum Verschweißen von porösen Membranen gelöst, umfassend:
i) Bereitstellen einer ersten porösen Membran und einer zweiten porösen Membran;
ii) zumindest anteiliges Überlagern von erster und zweiter poröser Membran gemäß i) unter Erhalt eines zumindest anteiligen Überlagerungsbereichs;
iii) Verschweißen von erster und zweiter poröser Membran zumindest in einem Teil des Überlagerungsbereichs gemäß ii) bei einer Temperatur im Bereich von 100 bis 250 °C unter Erhalt eines zumindest anteilig verschweißten Verbunds aus erster und zweiter poröser Membran,

wobei das Material der ersten und der zweiten porösen Membran ein thermoplastisches Elastomer umfasst, ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere,
wobei erste und zweite poröse Membran Poren mit einem mittleren Porendurchmesser kleiner als 2000 nm, bestimmt mittels Hg-Porosimetrie gemäß DIN 66133, aufweisen, und wobei erste und zweite poröse Membran zumindest in einem Teil des Überlagerungsbereichs miteinander in Form einer Schweißnaht verbunden sind.

Unter Verschweißen bzw. Schweißen versteht man gemäß DIN ISO 857-1 (ehemals DIN 1910-1) das unlösbare Verbinden von Bauteilen unter Anwendung von Wärme oder Druck (mit oder ohne Schweißzusatzwerkstoffe). Die Verbindung erfolgt abhängig vom Schweißverfahren in einer Schweißnaht oder Schweißpunkt. Die zum Schweißen notwendige Energie wird hierbei stets von außen zugeführt. Unter Verschweißen im Sinne der vorliegenden Erfindung wird das unlösbare Verbinden bzw. das Erzeugen einer nicht-lösbaren Verbindung von erster und zweiter poröser Membran verstanden. Hierunter ist zu verstehen, dass gemäß DIN ISO 527-3 im Bereich der Verschweißung (Schweißnaht) die Schweißnaht eine Bruchspannung im Bereich von 0, 2 bis 10 MPa, bevorzugt im Bereich von 0,5 bis 5 MPa, weiter bevorzugt im Bereich von 1 bis 2 MPa, aufweist, bevor eine Trennung von erster und zweiter poröser Membran auftritt. Die entsprechende Bruchdehnung der porösen Membran liegt im Bereich von 5 bis 200%, weiter bevorzugt im Bereich von 5 bis 100%.

Überraschenderweise weist ein derart erzeugter verschweißter Verbund die gleiche gute Wasserdampfpermeabilität und den gleichen hohen Flüssigkeitseintrittsdruck wie die unverschweißte erste poröse Membran selbst auf, insbesondere auch im direkten Bereich der Verschweißung (Schweißnaht).

Eine bevorzugte Ausführungsform betrifft daher ein Verfahren zum Verschweißen von porösen Membranen unter Erhalt eines zumindest anteilig verschweißten Verbunds aus erster und zweiter poröser Membran aufweisend eine Schweißnaht, wobei die Schweißnaht eine Bruchspannung im Bereich von 0, 2 bis 10 MPa, bevorzugt im Bereich von 0,5 bis 5 MPa, weiter bevorzugt im Bereich von 1 bis 2 MPa, aufweist und bevorzugt die erste poröse Membran eine Bruchdehnung im Bereich von 5 bis 200%, bevorzugt im Bereich von 5 bis 100%, aufweist.

### Verschweißen gemäß iii)

Gemäß iii) des vorliegenden Verfahrens erfolgt ein Verschweißen von erster und zweiter poröser Membran zumindest in einem Teil des Überlagerungsbereichs gemäß ii) bei einer Temperatur im Bereich von 100 bis 250°C unter Erhalt eines zumindest anteilig verschweißten Verbunds aus erster und zweiter poröser Membran. Das Verschweißen gemäß iii) erfolgt bevorzugt für eine Zeitdauer im Bereich von 0,1 Sekunde bis 10 Minuten, weiter bevorzugt im Bereich von 0,5 Sekunden bis 60 Sekunden, weiter bevorzugt im Bereich von 1 bis 10 Sekunden.

Bevorzugt erfolgt das Verschweißen gemäß iii) unter einer Atmosphäre ausgewählt aus Schutzgas, insbesondere Argon oder Stickstoff, Luft oder Magerluft, weiter bevorzugt unter Luft. Das Verschweißen gemäß iii) erfolgt bevorzugt bei einem Druck im Bereich von 1 bis 10 bar, weiter bevorzugt im Bereich von 2 bis 8 bar, weiter bevorzugt im Bereich von 3 bis 5 bar. Das Verschweißen gemäß iii) erfolgt bei einer Temperatur im Bereich von 100 bis 300 °C, bevorzugt im Bereich von 150 bis 250°C.

Für das Verschweißen können alle dem Fachmann bekannten Schweißapparaturen, welche für das Verschweißen poröser Membranen geeignet sind, verwendet werden. Beispielhaft zu nennen sind gängige Folienschweißgeräte, wie beispielsweise automatische oder halbautomatische Impulsschweißmaschinen.

Wie oben erwähnt weist ein derart erzeugter verschweißter Verbund die gleiche gute Wasserdampfpermeabilität und den gleichen hohen Flüssigkeitseintrittsdruck wie die unverschweißte erste poröse Membran selbst auf, insbesondere auch im direkten Bereich der Verschweißung (Schweißnaht). Der Ausdruck die "gleiche gute Wasserdampfpermeabilität" bedeutet im Kontext der vorliegenden Erfindung, dass die Wasserdampfpermeabilität des gemäß (iii) erhaltenen zumindest anteilig verschweißten Verbunds im Bereich von 75 bis 100%, bevorzugt im Bereich von 80 bis 100%, weiter bevorzugt im Bereich von 90 bis 100%, liegt, bezogen auf die Wasserdampfpermeabilität der gemäß (i) bereitgestellten ersten porösen Membran. Dies gilt für den gesamten, gemäß (iii) erhaltenen zumindest anteilig verschweißten Verbund, und insbesondere im Bereich der Schweißnaht. Der Ausdruck "den gleichen hohen Flüssigkeitseintrittsdruck" bedeutet im Kontext der vorliegenden Erfindung, dass der Flüssigkeitseintrittsdruck des gemäß (iii) erhaltenen zumindest anteilig verschweißten Verbunds im Bereich von 75 bis 100%, bevorzugt im Bereich von 80 bis 100%, weiter bevorzugt im Bereich von 90 bis 100%, liegt, bezogen auf den Flüssigkeitseintrittsdruck der gemäß (i) bereitgestellten ersten porösen Membran. Dies gilt für den gesamten, gemäß (iii) erhaltenen zumindest anteilig verschweißten Verbund, und insbesondere im Bereich der Schweißnaht.

### Poröse Membran

Gemäß i) werden eine erste und eine zweite poröse Membran bereitgestellt. Die Glasübergangstemperatur Tg der ersten porösen Membran liegt bevorzugt im Bereich von -40 bis 120°C.

Die erste poröse Membran weist bevorzugt eine mittlere Dicke im Bereich von 5 bis 150 µm, weiter bevorzugt im Bereich von 50 bis 100 µm, weiter bevorzugt im Bereich von 70 bis 90 µm, auf.

Eine bevorzugte Ausführungsform betrifft daher ein Verfahren zum Verschweißen von porösen Membranen umfassend:
i) Bereitstellen einer ersten porösen Membran und einer zweiten porösen Membran;
ii) zumindest anteiliges Überlagern von erster und zweiter poröser Membran gemäß i) unter Erhalt eines zumindest anteiligen Überlagerungsbereichs;
iii) Verschweißen von erster und zweiter poröser Membran zumindest in einem Teil des Überlagerungsbereichs gemäß ii) bei einer Temperatur im Bereich von 100 bis 250°C, bevorzugt im Bereich von 150 bis 250°C, unter Erhalt eines zumindest anteilig verschweißten Verbunds aus erster und zweiter poröser Membran;
wobei die erste poröse Membran eine mittlere Dicke im Bereich von 5 bis 150 µm, weiter bevorzugt im Bereich von 50 bis 100 µm, weiter bevorzugt im Bereich von 70 bis 90 µm, aufweist.

Die erste poröse Membran weist Poren mit einem mittleren Porendurchmesser kleiner als 2000 nm, bevorzugt im Bereich von 0,001 µm bis 0,8 µm, bestimmt mittels Hg-Porosimetrie gemäß DIN 66133, auf.

Eine bevorzugte Ausführungsform betrifft daher ein Verfahren zum Verschweißen von porösen Membranen umfassend:
iii) Verschweißen von erster und zweiter poröser Membran zumindest in einem Teil des Überlagerungsbereichs gemäß ii) bei einer Temperatur im Bereich von 150 bis 250°C, unter Erhalt eines zumindest anteilig verschweißten Verbunds aus erster und zweiter poröser Membran;
wobei die erste poröse Membran Poren mit einem mittleren Porendurchmesser kleiner als 2000 nm, bevorzugt im Bereich von 0,001 µm bis 0,8 µm, bestimmt mittels Hg-Porosimetrie gemäß DIN 66133, aufweist.

Eine besonders bevorzugte Ausführungsform betrifft ein Verfahren zum Verschweißen von porösen Membranen, wobei die erste poröse Membran eine mittlere Dicke im Bereich von 5 bis 150 µm, weiter bevorzugt im Bereich von 50 bis 100 µm, weiter bevorzugt im Bereich von 70 bis 90 µm, aufweist; und
wobei die erste poröse Membran Poren mit einem mittleren Porendurchmesser kleiner als 2000 nm, bevorzugt im Bereich von 0,001 µm bis 0,8 µm, bestimmt mittels Hg-Porosimetrie gemäß DIN 66133, aufweist.

Das Material der ersten porösen Membran umfasst ein thermoplastisches Elastomer, ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere, bevorzugt ein Polyurethan-Elastomer.

Eine bevorzugte Ausführungsform betrifft daher ein Verfahren zum Verschweißen von porösen Membranen, wobei das Material der ersten porösen Membran ein Polyurethan-Elastomer umfasst.

Eine besonders bevorzugte Ausführungsform betrifft ein Verfahren zum Verschweißen von porösen Membranen wobei das Material der ersten porösen Membran ein Polyurethan-Elastomer umfasst;
wobei die erste poröse Membran eine mittlere Dicke im Bereich von 5 bis 150 µm, weiter bevorzugt im Bereich von 50 bis 100 µm, weiter bevorzugt im Bereich von 70 bis 90 µm, aufweist; und/oder, bevorzugt und,
wobei die erste poröse Membran Poren mit einem mittleren Porendurchmesser kleiner als 2000 nm, bevorzugt im Bereich von 0,001 µm bis 0,8 µm, bestimmt mittels Hg-Porosimetrie gemäß DIN 66133, aufweist.

Bevorzugt umfasst das Material der ersten porösen Membran ein Polyurethan-Elastomer, basierend auf den folgenden Komponenten:
- 80 bis 100 % Gewichts-% einer Mischung aus mindestens einem Diol (D1) und mindestens einem Isocyanat (11),
- 0 bis 20 % Gewichts-% mindestens einer Verbindung (C1) aufweisend mindestens zwei gegenüber Isocyanat reaktiven Gruppen;
wobei die erste poröse Membran bevorzugt Poren mit einem mittleren Porendurchmesser im Bereich von 0,001 µm bis 0,8 µm, bestimmt mittels Hg-Porosimetrie gemäß DIN 66133, aufweist.

Im Kontext der vorliegenden Erfindung ergibt die Summe der Gewichts-% der Komponenten, auf denen das Polyurethan-Elastomer basiert, 100 Gewichts-%. Zusätzlich kann das Polyurethan-Elastomer weitere Additive umfassen.

Im Kontext der vorliegenden Erfindung wird unter einer Membran eine dünne, semipermeable Struktur verstanden, welche in der Lage ist, zwei Flüssigkeiten oder molekulare und/oder ionische Komponenten oder Partikel von einer Flüssigkeit zu trennen. Eine Membran agiert als selektive Barriere, welche einigen Partikel, Substanzen oder Chemikalien den Durchtritt erlaubt, während andere zurückgehalten werden. Beispielsweise kann eine Membran eine Umkehrosmosemembran (reverse osmosis (RO)), eine Vorwärtsosmosemembran (forward osmosis (FO)) Nanofiltrationsmembran (NF), Ultrafiltrationsmembran (UF), oder eine Mikrofiltrationsmembran (MF) sein.

Die Porengrößenverteilung innerhalb der ersten Membran ist vorzugsweise nicht homogen, die erste Membran umfasst bevorzugt Poren mit verschiedenen Porengrößen. Vorzugsweise weist die Porengrößenverteilung einen Gradienten über den Durchmesser der ersten Membran auf, wobei ein Gradient im Kontext der Erfindung so verstanden wird, dass Poren auf einer ersten Oberfläche der ersten Membran oder nahe an dieser Oberfläche einen mittleren Porendurchmesser aufweisen, welche abweichend von mittleren Porendurchmesser einer zweiten Oberfläche oder nahe an dieser zweiten Oberfläche ist. Im Kontext der vorliegenden Erfindung ist es beispielsweise möglich, dass die Poren an oder nahe zur ersten Oberfläche einen mittleren Porendurchmesser im Bereich von 0,001 µm bis 0,01 µm aufweisen, bestimmt mittels Hg-Porosimetrie gemäß DIN 66133, und dass die Poren an oder nahe zur zweiten Oberfläche einen mittleren Porendurchmesser im Bereich von 0,1 µm bis 0,8 µm, bestimmt mittels Hg-Porosimetrie gemäß DIN 66133, aufweisen. Der Grad des Gradienten des Porendurchmessers innerhalb der ersten Membran kann in weiten Bereichen variieren. Das Verhältnis des Porendurchmessers von Poren an oder nahe zur ersten Oberfläche der ersten Membran zu dem der Poren an oder nahe zur zweiten Oberfläche kann beispielsweise im Bereich von 1:5 bis 1:10000, bevorzugt im Bereich von 1:10 bis 1:1000, weiter bevorzugt im Bereich von 1:100 bis 1:500 liegen. Gemäß einer bevorzugten Ausführungsform weist die Porengrößenverteilung der ersten porösen Membran einen Gradienten über den Durchmesser der Membran auf.

Gemäß einer bevorzugten, eingangs erläuterten, Ausführungsform umfasst das Material der ersten porösen Membran ein Polyurethan-Elastomer (P1), basierend auf den folgenden Komponenten:
- 80 bis 100 % Gewichts-% einer Mischung aus mindestens einem Diol (D1) und mindestens einem Isocyanat (11),
- 0 bis 20 % Gewichts-% mindestens einer Verbindung (C1) aufweisend mindestens zwei gegenüber Isocyanat reaktiven Gruppen;
wobei die erste poröse Membran bevorzugt Poren mit einem mittleren Porendurchmesser im Bereich von 0,001 µm bis 0,8 µm, bestimmt mittels Hg-Porosimetrie gemäß DIN 66133, aufweist.

Das Polyurethan umfasst daher keine oder nur geringe Mengen der Verbindung (C1) und besteht größtenteils aus einer Mischung aus Diol (D1) und Polyisocyanat (i1). Bevorzugt basiert das Polyurethan (PU1) auf 85 bis 100 Gewichts-% einer Mischung aus mindestens einem Diol (D1) und mindestens einem Polyisocyanat (I1), sowie 0 bis 15 Gewichts-% mindestens einer Verbindung (C1) aufweisend mindestens zwei gegenüber Isocyanat reaktiven Gruppen, weiter bevorzugt 90 bis 99,9 Gewichts-% einer Mischung aus mindestens einem Diol (D1) und mindestens einem Polyisocyanat (l1), und 0,1 bis 10 Gewichts-% mindestens einer Verbindung (C1) aufweisend mindestens zwei gegenüber Isocyanat reaktiven Gruppen.

Das molare Verhältnis des mindestens einen Diols (D1) und des mindestens einen Polyisocyanats (11) liegt üblicherweise im Bereich von 95:100 bis 100:95. Bevorzugt liegt das molare Verhältnis des mindestens einen Diols (D1) und des mindestens einen Polyisocyanats (11) im Bereich von 98:100 bis 100:98, weiter bevorzugt im Bereich von 99:100 bis 100:99.

Die erste Membran kann weitere Verbindungen, wie beispielsweise weitere Polyurethane, umfassen. Beispielsweise kann die erste Membran ein weiteres Polyurethan (PU2), welches ein thermoplastisches Polyurethan sein kann, umfassen. Gemäß einer bevorzugten Ausführungsform umfasst die erste poröse Membran daher ein weiteres Polyurethan (PU2), basierend auf mindestens einem Polyol (P2), mindestens einem Diol (D2) und mindestens einem Polyisocyanat (I2).

Im Allgemeinen umfasst die erste Membran zumindest 80 Gewichts-% an Polyurethan (PU1), bevorzugt mindestens 85 Gewichts-% an Polyurethan (PU1), weiter bevorzugt mindestens 90 Gewichts-% an Polyurethan (PU1). Beispielsweise kann die erste Membran Polyurethan (PU1) in einer Menge im Bereich von 80 bis 100 Gewichts-%, weiter bevorzugt im Bereich von 85 bis 99 Gewichts-%, weiter bevorzugt im Bereich von 90 bis 95 Gewichts-%, umfassen.

Das Polyurethan (PU1) basiert dabei auf 80 bis 100 Gewichts-% einer Mischung aus mindestens einem Diol (D1) und mindestens einem Polyisocyanat (l1), sowie 0 bis 20 Gewichts-% mindestens einer Verbindung (C1) aufweisend mindestens zwei gegenüber Isocyanat reaktiven Gruppen.

Die Verbindung (C1) kann jedwede Verbindung mit mindestens zwei gegenüber Isocyanat reaktiven Gruppen sein. Bevorzugt sind die gegenüber Isocyanat reaktiven Gruppen Hydroxy- oder Amino-Gruppen. Die Verbindung (C1) kann zur Modifikation der Eigenschaften des Polyurethans (PU1) zugesetzt werden. Jedwede Verbindung kann verwendet werden, solange sie geeignet ist, ein Polyurethan (PU1) mit der Mischung aus dem mindestens einen Diol (D1) und dem mindestens einen Polyisocyanat (11) zu ergeben. Beispielsweise kann die Verbindung (C1) ein Polyol sein, aber auch ein Polymer mit mindestens zwei Hydroxygruppen oder mindestens zwei Aminogruppen anders als ein Polyol, beispielsweise ein hydrophobes Polymer oder Oligomer umfassend Silizium.

Die Verbindung (C1) ist bevorzugt ein Polyol, weiter bevorzugt ausgewählt aus der Gruppe der divalenten Reste eines Oligo- oder Polysiloxans der allgemeinen Formel I

-[Ak-O]_{q}-Ak-Si(R₂)-[O-Si(R₂)]ₚ-O-Si(R₂)-Ak-[O-Ak]_{q'}- (I)

wobei Ak C₂-C₄ Alkylen und R C₁-C₄ Alkyl bedeutet und jeder von p, q und q' unabhängig eine Zahl im Bereich von 0-50 ist, wobei p weiter bevorzugt eine Zahl im Bereich von 1 bis 50, weiter bevorzugt im Bereich von 2 ist 50. Ak kann gleiche Alkylen-Einheiten in jedem (C1) bedeuten, aber Ak kann ebenso verschiedene Alkylen-Einheiten im gleichen Rest (C1) bedeuten. Ak kann beispielsweise Ethylen oder Propylen im gleichen Rest (C1) bedeuten.

In einer Ausführungsform ist (C1) ein Polydimethylsiloxan der allgemeinen Formel (II) 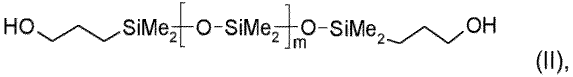 wobei m im Bereich von 5 bis 80 liegt. In einer weiteren Ausführungsform ist (C1) ein Polydimethylsiloxan der allgemeinen Formel (III) 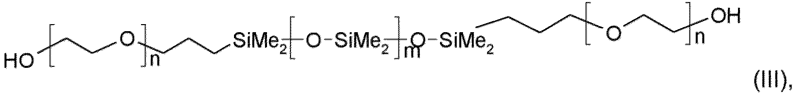 wobei n und m jeweils im Bereich von 5 bis 80 liegen.

Gemäß einer weiteren Ausführungsform ist die Verbindung (C1) ein Polyol. Hier sind alle geeigneten Polyole einsetzbar, beispielsweise Polyetherdiole oder Polyesterdiole, oder Mischungen von zwei oder mehr davon. Geeignete Polyetherpolyole oder -diole sind beispielsweise Polyetherdiole basierend auf Ethylenoxid oder Propylenoxid oder deren Mischungen, beispielsweise Copolymere wie Blockcopolymere. Weiterhin kann jedes geeignete Polyesterdiol eingesetzt werden, wobei Polyesterdiol hier auch Polycarbonatdiole umfasst.

Die Zusammensetzung und die Eigenschaften der ersten porösen Membran können abhängig von der Anwendung variiert werden. Beispielsweise kann die Dicke der ersten Membran in einem weiteren Bereich variiert werden.

Die erste poröse Membran weist einen Flüssigkeitseintrittsdruck (LEP) bestimmt gemäß DIN EN 20811 im Bereich von 1 bis 5 bar, bevorzugt im Bereich von 3 bis 4 bar auf. Die Wasserdampfpermeabilität (WDD) bestimmt gemäß DIN 53122 bei 38 °C und 90% relativer Luftfeuchte beträgt mehr als 1000 [g/m²*d].

Das Polyurethan (PU1) basiert auf 80 bis 100 Gewichts-% einer Mischung aus mindestens einem Diol (D1) und mindestens einem Polyisocyanat (11). Polyurethan (PU2), welches ebenfalls in der ersten porösen Membran vorhanden sein kann, basiert auf mindestens einem Polyol (P2), mindestens einem Diol (D2) und mindestens einem Polyisocyanat (I2).

Polyisocyanat (11) und Polyisocyanat (I2) sind gleich oder verschieden. Als Polyisocyanate (11), (I2) können aliphatische, cycloaliphatische, araliphatische und/oder aromatische Diisocyanate eingesetzt werden. Beispielhaft zu nennen sind die folgenden aromatischen Isocyanate: 2,4-Toluol-diisocyanat, Mischungen aus 2,4- und 2,6-Toluoldiisocyanat, 4,4'-, 2,4'- und/oder 2,2'-Diphenylmethandiisocyanat (MDI), Mischungen aus 2,4'- und 4,4'-Diphenylmethandiisocyanat, urethan-modifiziertes flüssiges 4,4'- und/oder 2,4-Diphenylmethandiisocyanat, 4,4'-Diisocyanatodiphenylethan, Mischungen aus monomeren Methandiphenyldiisocyanaten und weiteren hoch polycyclischen Homologen von Methandiphenyldiisocyanat (polymeres MDI), 1,2- und 1,5-Naphthylendiisocyanat.

Aliphatische Diisocyanate sind übliche aliphatische und/oder cycloaliphatische Diisocyanate, beispielsweise tri-, tetra-, penta-, hexa-, hepta- und/oder Octamethylendiisocyanat, 2-Methylpentamethylen-1,5-diisocyanat, 2-Ethylbutylen-1,4-diisocyanat, 1-Isocyanato-3,3,5-trimethyl-5-isocyanatomethylcyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat, 4,4'-, 2,4'- und/oder 2,2'-Dicyclohexylmethandiisocyanat.

Polyisocyanatprepolymere sind erhältlich mittels Reaktion der oben beschriebenen Polyisocyanate im Überschuss, beispielsweise bei Temperaturen im Bereich von 30 bis 100°C, bevorzugt bei mehr als 80°C, mit Polyolen unter Erhalt des Prepolymers. Für die Herstellung des Prepolymers werden bevorzugt Polyisocyanate und kommerziell erhältliche Polyole basierend auf Polyestern eingesetzt, ausgehend beispielsweise von Adipinsäure, oder auf Polyethern, ausgehend beispielsweise von Ethylenoxid und/oder Propylenoxid.

Polyole sind dem Fachmann bekannt und beispielsweise beschrieben in "Kunststoffhandbuch, 7, Polyurethane", Carl Hanser Verlag, 3. Auflage 1993, Sektion 3.1. Polyole welche bevorzugt eingesetzt werden sind polymere Verbindungen die Wasserstoffatome aufweisen, welche reaktiv gegenüber Isocyanaten sind. Besonders bevorzugte Polyole sind Polyetherole.

In der Herstellung der Polyisocyanatpräpolymere können übliche Kettenverlängerer oder Vernetzungsmittel optional den Polyolen zugesetzt werden. Bevorzugte Kettenverlängerer sind 1,4-Butandiol, Dipropylenglykol und/oder Tripropylenglykol. In diesem Fall ist das Verhältnis der organischen Polyisocyanate zu Polyolen und Kettenverlängerer vorzugsweise so gewählt, dass das Isocyanatprepolymer einen NCO-Gehalt im Bereich von 2% bis 30%, weiter bevorzugt im Bereich von 6% bis 28%, weiter bevorzugt im Bereich von 10% bis 24%, aufweist.

Das mindestens eine Polyisocyanat (11), (12) ist vorzugsweise ausgewählt aus der Gruppe bestehend aus aromatischen araliphatischen und aliphatischen Polyisocyanaten, bevorzugt aus der Gruppe bestehend aus Diphenylmethandiisocyanat (MDI), Toluoldiisocyanat (TDI) und Hexamethylendiisocyanat (HDI). Das Polyisocyanat kann rein oder in Form einer Zusammensetzung, beispielsweise als Isocyanatprepolymer eingesetzt werden. Weiterhin kann eine Mischung umfassend Polyisocyanat und mindestens ein Lösungsmittel, eingesetzt werden, wobei geeignete Lösungsmittel dem Fachmann bekannt sind.

Diol (D1) und Diol (D2) können gleich oder verschieden sein. Generell kann jedwedes Diol eingesetzt werden. Diol (D1) und Diol (D2) sind bevorzugt ausgewählt aus der Gruppe bestehend aus aliphatischen, araliphatischen, aromatischen, und/oder cycloaliphatischen Verbindungen mit einem Molgewicht im Bereich von 0,05 kg/mol bis 0,499 kg/mol, bevorzugt difunktionale Verbindungen, beispielsweise Diamine und/oder Alkandiole mit 2 bis 10 Kohlenstoffatomen im Alkylenteil, di-, tri-, tetra-, penta-, hexa-, hepta-, octa-, nona-, und/oder Decaalkylenglykole aufweisend von 3 bis 8 Kohlenstoffatome, insbesondere Ethylen-1,2-glykol, 1,3-Propandiol, 1,4-Butandiol, 1,6-Hexandiol, und bevorzugt korrespondierende oligo- und/oder Polypropylenglykole wie Diethylenglykol, Dipropylenglykol, 1,4-Cyclohexandiol, 1,4-Dimethanolcyclohexan, und Neopentylglykol, und es ist also möglich Mischungen zu verwenden. Bevorzugt weisen die Diole nur primäre Hydroxygruppen auf, wobei besonders bevorzugt Ethandiol, Butandiol und Hexandiol sind. Diol (D1) bzw. Diol (D2) ist daher bevorzugt ausgewählt aus der Gruppe bestehend aus Ethandiol, Butandiol und Hexandiol.

In der Herstellung des Polyurethans (PU1) und/oder Polyurethans (PU2) können weitere Verbindungen wie beispielsweise Katalysatoren, und/oder übliche Hilfsstoffe und/oder Additive eingesetzt werden.

Übliche Hilfsstoffe sind beispielsweise oberflächenaktive Substanzen, Füllstoffe, Flammhemmer, Nukleirungsmittel, Oxidationsstabilisatoren, Schmiermittel und Mold-release-Hilfen, Farbstoffe, Pigmente und optional Stabilisatoren, z.B. zum Schutz gegen Hydrolyse, Licht, Hitze oder Entfärbung, anorganische und/oder organische Füllstoffe, Verstärkungsmittel und Weichmacher. Übliche Hilfsstoffe und Additive können beispielhaft dem "Kunststoffhandbuch" entnommen werden, Volumen 7, herausgegeben von Vieweg und Höchtlen, Carl Hanser Verlag, München 1966 (Seiten. 103-113).

Zur Herstellung des Polyurethans (PU2) wird ein Polyol (P2) als weitere Komponente verwendet. Polyol (P2) ist vorzugsweise ein Diol. Jedwedes geeignete Diol kann eingesetzt werden, beispielsweise Polyetherdiole oder Polyesterdiole, oder Mischungen von zwei oder mehr davon.

Geeignete Polyetherdiole sind beispielsweise Polyetherdiole basierend auf Ethylenoxid oder Propylenoxid oder Mischungen davon, beispielsweise Copolymere wie Blockcopolymere. Das Verhältnis der Ethylenoxid-Einheiten zu Propylen-Einheiten kann in einem weiteren Bereich variiert werden und kann beispielsweise im Bereich von 50:50 bis 95:5, bevorzugt im Bereich von 60:40 bis 90:10, weiter bevorzugt im Bereich von 70:30 bis 85:15, weiter bevorzugt im Bereich von 75:25 bis 80:20, liegen. Das Molgewicht der Polyetherdiole liegt beispielsweise im Bereich von 1000 bis 4000 Dalton, bevorzugt im Bereich von 1500 bis 3000 Dalton, weiter bevorzugt im Bereich von 2000 bis 2500 Dalton.

Weiterhin kann jedes geeignete Polyesterdiol eingesetzt werden, wobei Polyesterdiol hier auch Polycarbonatdiole umfasst.

Geeignete Polyesterdiole können erzeugt werden aus organischen Dicarbonsäuren mit 2 bis 12 Kohlenstoffatomen, bevorzugt aromatischen Dicarbonsäuren mit 8 bis 12 Kohlenstoffatomen, und aus mehrwertigen Alkoholen, bevorzugt Diolen mit 2 bis 12 Kohlenstoffatomen, bevorzugt von 2 bis 6 Kohlenstoffatomen. Beispiele für Dicarbonsäuren sind: Bernsteinsäure, Glutarsäure, Adipinsäure, Korksäure, Azelainsäure, Sebacinsäure, Decandicarboxylsäure, Maleinsäure, Fumarsäure, Phthalsäure, Iso-Phthalsäure, Terephthalsäure, und die isomeren Naphthalendicarbonsäuren. Die Dicarbonsäure kann allein oder in Mischung eingesetzt werden. Anstelle der freien Dicarbonsäure kann auch ein entsprechendes Dicarbonsäurederivat verwendet werden, beispielsweise Dicarbonsäureester von Alkoholen mit 1 bis 4 Kohlenstoffatomen, oder Dicarbonsäureanhydride. Beispiele von zwei- und mehrwertigen Alkoholen, insbesondere Diolen, sind Ethandiol, Diethylenglykol, 1,2- und 1,3-Propandiol, Dipropylenglykol, 1,4-Butandiol, 1,5-Pentandiol, 1,6-Hexandiol, 1,10-Decandiol, Glycerin, und Trimethylolpropan, bevorzugt Ethylenglykol, 1,3-Propandiol, Methyl-1,3-propandiol, 1,4-Butandiol, 3-Methyl-1,5-pentandiol, oder 1,6-Hexandiol. Beispiele von anderen Verbindungen die geeignet sind, sind Polyesterdiole aus Lactonen wie epsilon-Caprolacton, oder Hydroxycarbonsäuren, z.B. omega-Hydroxycapronsäure und Hydroxybenzoesäuren.

### Herstellung der ersten und zweiten porösen Membran

Die erste poröse Membran wird mit einem Verfahren hergestellt, umfassend
(a) Bereitstellen einer Lösung (L1) umfassend mindestens ein Polyurethan (PU1);
(b) Herstellen der ersten Membran aus der Lösung (L1) gemäß (a) gemäß Phaseninversion.

Die poröse Membran erhält dabei Poren mit einem mittleren Porendurchmesser im Bereich von 0,001 µm bis 0,8 µm, bestimmt mittels Hg-Porosimetrie gemäß DIN 66133.

Bevorzugt erhält die erste poröse Membran dabei bezüglich der Porengrößenverteilung einen Gradienten über den Durchmesser der Membran.

Gemäß (a) wird die Lösung (L1) umfassend mindestens ein Polyurethan (PU1) bereitgestellt. Die Lösung (L1) umfasst Polyurethan (PU1) und mindestens ein geeignetes Lösungsmittel oder eine Lösungsmittelmischung. Geeignete Lösungsmittel sind beispielsweise ausgewählt aus der Gruppe der organischen, insbesondere aprotischen polaren Lösungsmittel. Geeignete Lösungsmittel weisen einen Siedepunkt im Bereich von 80 bis 320°C, bevorzugt von 100 bis 280°C, weiter bevorzugt von 150 bis 250°C, auf. Geeignete aprotische polare Lösungsmittel sind beispielsweise hochsiedende Ester, Ketone, asymmetrisch halogenierte Kohlenwasserstoffe, Anisol, N,N-Dimethylformamid, N,N-Dimethylacetamid, Dimethylsulfoxid, Sulfolan, N,N-Dimethyl-2-hydroxypropansäureamid, N,N-Diethyl-2-hydroxypropansäureamid, N,N-Dimethyl-2-methoxypropansäureamid, N,N-Diethyl-2-methoxypropansäureamide, N-Formyl-pyrrolidin, N-Acetyl-pyrrolidin, N-Formylpiperidin, N-Acetylpiperidin, N-Formyl-morpholin, N-Acetyl-morpholin, N-Methyl-2-pyrrolidon und/oder N-Ethyl-2-pyrrolidon. Mischungen von zwei oder mehr dieser Lösungsmittel können ebenfalls eingesetzt werden.

Besonders bevorzugt ist N-Methylpyrrolidon als Lösungsmittel für die Lösung (L1). Die Lösung (L1) kann Polyurethan (PU1) in einer Menge ausreichend zur Ausbildung eines Filmes aus der Lösung aufweisen. Die Lösung (L1) umfasst beispielsweise von 10 bis 35 Gewichts-% an Polyurethan (PU1), bevorzugt von 15 bis 25 Gewichts-%.

Die Lösung (L1) kann bei erhöhten Temperaturen erzeugt werden.

Gemäß (b) wird die poröse Membran aus der Lösung (L1) mittels Phaseninversion erzeugt. Geeignete Methoden sind dem Fachmann bekannt. Bevorzugt wird eine nicht-Lösungsmittelinduzierte Phaseninversion durchgeführt. Der Schritt (b) kann beispielsweise die Schritte (b-a) und (b-b) umfassen:
(b-a) Ausbilden eines Filmes aus der Lösung (L1);
(b-b) Inkontaktbringen des Filmes gemäß (b-a) mit einer Mischung (L2).

Gemäß (b-a) wird aus der Lösung (L1) ein Film mittels dem Fachmann bekannter Methoden erzeugt. Dieser Film wird dann gemäß (b-b) mit einer Mischung (L2) in Kontakt gebracht.

Der Schritt (b) verursacht Koagulation und Membranen werden erhalten. Die Mischung (L2) kann jedwede Verbindung enthalten, welche geeignet ist, Koagulation zu verursachen. Die Mischung (L2) weist eine geringere Löslichkeit für Polyurethan (PU1) als das für die Herstellung von (L1) eingesetzte Lösungsmittel auf. Insbesondere werden nicht-Lösungsmittel wie beispielsweise Wasser oder Mischungen enthaltend Wasser eingesetzt. Geeignete Koagulantien umfassen beispielsweise flüssiges Wasser, Wasserdampf, Alkohole oder Mischungen hiervon. Bevorzugte Alkohole als Koagulantien in (L2) sind mono-, di- oder tri-Alkanole die keine weiteren funktionellen Gruppen aufweisen wie iso-Propanol, Ethylenglykol oder Propylenglykol.

Der Schritt (b), insbesondere die Schritte (b-a) und/oder (b-b) können bei erhöhten Temperaturen ausgeführt werden.

Lösung (L1) umfasst mindestens ein Polyurethan (PU1) kann aber auch weitere Verbindungen oder Additive umfassen. Gemäß einer Ausführungsform umfasst (L1) weiterhin Polyurethan (PU2). Die Lösung (L1) kann ebenfalls Additive wie Polyhydroxy-Verbindungen wie Diole oder Triole enthalten. Beispielsweise können Additive ausgewählt werden aus der Gruppe bestehend aus mono-, di- oder tri-Alkanolen, welche keine weiteren funktionellen Gruppen aufweisen wie iso-Propanol, Ethylenglykol, Propylenglykol oder Propylentriol (Glycerin). Bevorzugt wird Glycerin als Additiv in der Lösung (L1) verwendet.

Zweite poröse Membran Das Material der zweiten porösen Membran umfasst ein thermoplastisches Elastomer, ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere, bevorzugt Polyurethan-Elastomer.

Bevorzugt weist die zweite poröse Membran eine mittlere Dicke im Bereich von 5 bis 150 µm, weiter bevorzugt im Bereich von 50 bis 100 µm, weiter bevorzugt im Bereich von 70 bis 90 µm, auf. Bevorzugt weist die zweite poröse Membran Poren mit einem mittleren Porendurchmesser kleiner als 2000 nm, bevorzugt im Bereich von 0,001 µm bis 0,8 µm, bestimmt mittels Hg-Porosimetrie gemäß DIN 66133, auf.

In einer bevorzugten Ausführungsform umfasst das Material der ersten porösen Membran gemäß i) und das der zweiten porösen Membran das gleiche thermoplastische Elastomer.

Gemäß einer bevorzugten Ausführungsform betrifft die Erfindung daher ein Verfahren zum Verschweißen von porösen Membranen, umfassend:
iii) Verschweißen von erster und zweiter poröser Membran zumindest in einem Teil des Überlagerungsbereichs gemäß ii) bei einer Temperatur im Bereich von 150 bis 250°C, unter Erhalt eines zumindest anteilig verschweißten Verbunds aus erster und zweiter poröser Membran.

Die zweite poröse Membran wird bevorzugt nach dem gleichen Verfahren wie oben zur ersten porösen Membran beschrieben erzeugt.

### Verschweißter Verbund

Die Erfindung betrifft weiterhin einen verschweißten Verbund aus einer ersten und zweiten porösen Membran, erhalten oder erhältlich nach dem im vorangegangenen beschriebenen Verfahren, wobei erste und zweite poröse Membran zumindest in einem Teil des Überlagerungsbereichs miteinander in Form einer Schweißnaht verbunden sind.

Unter einem "verschweißten Verbund aus einer ersten und zweiten porösen Membran" wird ein Verbund verstanden, bei welchem sich erste und zweite poröse Membran zumindest anteilig überlagern und wobei erste und zweite poröse Membran zumindest in einem Teil des Überlagerungsbereichs miteinander in Form einer Schweißnaht verbunden sind. Überraschenderweise weist ein derartiger verschweißter Verbund die gleiche gute Wasserdampfpermeabilität und den gleichen hohen Flüssigkeitseintrittsdruck wie die unverschweißte erste poröse Membran selbst auf, insbesondere auch im direkten Bereich der Schweißnaht. Die "Schweißnaht" im Kontext der vorliegenden Erfindung meint den Bereich, in welchem die Verschweißung von erster und zweiter poröser Membran erfolgt ist, d.h. den Bereich in welchem erste und zweite poröse Membran unlösbar miteinander verbunden sind. Unter unlösbar (synonym nicht-lösbar) ist zu verstehen, dass gemäß DIN ISO 527-3 im Bereich der Schweißnaht die Schweißnaht eine Bruchspannung im Bereich von 0, 2 bis 10 MPa, bevorzugt im Bereich von 0,5 bis 5 MPa, weiter bevorzugt im Bereich von 1 bis 2 MPa, aufweist, bevor eine Trennung von erster und zweiter poröser Membran auftritt. Die entsprechende Bruchdehnung der ersten und zweiten porösen Membran liegt im Bereich von 5 bis 200%, weiter bevorzugt im Bereich von 5 bis 100%.

Der Ausdruck die "gleiche gute Wasserdampfpermeabilität" bedeutet im Kontext der vorliegenden Erfindung, dass die Wasserdampfpermeabilität des gemäß (iii) erhaltenen zumindest anteilig verschweißten Verbunds im Bereich von 75 bis 100%, bevorzugt im Bereich von 80 bis 100%, weiter bevorzugt im Bereich von 90 bis 100%, liegt, bezogen auf die Wasserdampfpermeabilität der gemäß (i) bereitgestellten ersten porösen Membran. Dies gilt für den gesamten, gemäß (iii) erhaltenen zumindest anteilig verschweißten Verbund, und insbesondere im Bereich der Schweißnaht. Der Ausdruck "den gleichen hohen Flüssigkeitseintrittsdruck" bedeutet im Kontext der vorliegenden Erfindung, dass der Flüssigkeitseintrittsdruck des gemäß (iii) erhaltenen zumindest anteilig verschweißten Verbunds im Bereich von 75 bis 100%, bevorzugt im Bereich von 80 bis 100%, weiter bevorzugt im Bereich von 90 bis 100%, liegt, bezogen auf den Flüssigkeitseintrittsdruck der gemäß (i) bereitgestellten ersten porösen Membran. Dies gilt für den gesamten, gemäß (iii) erhaltenen zumindest anteilig verschweißten Verbund, und insbesondere im Bereich der Schweißnaht.

Bevorzugt weist der erhaltene oder erhältliche verschweißte Verbund, insbesondere im Bereich der Schweißnaht, eine Wasserdampfdurchlässigkeit (WDD) auf, welche bei 38 °C und 90 % relativer Luftfeuchtigkeit entsprechend DIN 53122 mehr als 1000 [g/m²*d] beträgt. Ebenso weist der erhaltene oder erhältliche verschweißte Verbund bevorzugt, insbesondere im Bereich der Schweißnaht, eine Wasserdichtigkeit (LEP) auf, welche größer als 2 bar beträgt und bevorzugt im Bereich von 2 bis 5 bar, weiter bevorzugt im Bereich von 3 bis 4 bar, liegt, bestimmt nach DIN EN 20811.

Offenbart ist weiterhin einen verschweißten Verbund aus einer ersten und zweiten porösen Membran, wobei die erste poröse Membran eine mittlere Dicke im Bereich von 5 bis 150 µm, bevorzugt im Bereich von 50 bis 100 µm, weiter bevorzugt im Bereich von 70 bis 90 µm, aufweist. Gemäß einer Ausführungsform weist die erste poröse Membran Poren mit einem mittleren Porendurchmesser kleiner als 2000 nm, bevorzugt im Bereich von 0,001 µm bis 0,8 µm, bestimmt mittels Hg-Porosimetrie gemäß DIN 66133, auf. Unter einem "verschweißten Verbund aus erster und zweiter poröser Membran" wird auch hier ein Verbund verstanden, bei welchem sich erste und zweite poröse Membran zumindest anteilig überlagern und wobei erste und zweite poröse Membran zumindest in einem Teil des Überlagerungsbereichs miteinander in Form einer Schweißnaht verbunden sind. Die "Schweißnaht" im Kontext der vorliegenden Erfindung meint den Bereich, in welchem die Verschweißung von erster und zweiter poröser Membran erfolgt ist, d.h. den Bereich in welchem erste und zweite poröse Membran unlösbar miteinander verbunden sind. Unter unlösbar (synonym nicht-lösbar) ist zu verstehen, dass gemäß DIN ISO 527-3 im Bereich der Schweißnaht die Schweißnaht eine Bruchspannung im Bereich von 0, 2 bis 10 MPa, bevorzugt im Bereich von 0,5 bis 5 MPa, weiter bevorzugt im Bereich von 1 bis 2 MPa, aufweist, bevor eine Trennung von erster und zweiter poröser Membran auftritt. Die entsprechende Bruchdehnung der ersten porösen Membran liegt im Bereich von 5 bis 200%, weiter bevorzugt im Bereich von 5 bis 100%.

Das Material der ersten porösen Membran umfasst bevorzugt ein thermoplastisches Elastomer, weiter bevorzugt ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere, weiter bevorzugt Polyurethan-Elastomer. Bevorzugt umfasst das Material der ersten porösen Membran ein Polyurethan-Elastomer (PU1), basierend auf den folgenden Komponenten:
- 80 bis 100 % Gewichts-% einer Mischung aus mindestens einem Diol (D1) und mindestens einem Isocyanat (11),
- 0 bis 20 % Gewichts-% mindestens einer Verbindung (C1) aufweisend mindestens zwei gegenüber Isocyanat reaktiven Gruppen; und wobei die erste poröse Membran Poren mit einem mittleren Porendurchmesser im Bereich von 0,001 µm bis 0,8 µm, bestimmt mittels Hg-Porosimetrie gemäß DIN 66133, aufweist.

Bevorzugt umfasst das Polyurethan-Elastomer (PU1) ein weiteres Polyurethan (PU2), basierend auf mindestens einem Polyol (P2), mindestens einem Diol (D2) und mindestens einem Polyisocyanat (I2).

Hinsichtlich Details zu PU1, PU2, P2, D1, D2, I1 und I2 wird auf die obigen Ausführungen verwiesen.

Der verschweißte Verbund weist die gleiche gute Wasserdampfpermeabilität und den gleichen hohen Flüssigkeitseintrittsdruck wie die unverschweißte erste poröse Membran selbst auf, insbesondere auch im direkten Bereich der Verschweißung (Schweißnaht). Der Ausdruck die "gleiche gute Wasserdampfpermeabilität" bedeutet im Kontext der vorliegenden Erfindung, dass die Wasserdampfpermeabilität des verschweißten Verbunds im Bereich von 75 bis 100%, bevorzugt im Bereich von 80 bis 100%, weiter bevorzugt im Bereich von 90 bis 100%, liegt, bezogen auf die Wasserdampfpermeabilität der ersten porösen Membran. Dies gilt für den gesamten verschweißten Verbund, und insbesondere im Bereich der Schweißnaht. Der Ausdruck "den gleichen hohen Flüssigkeitseintrittsdruck" bedeutet im Kontext der vorliegenden Erfindung, dass der Flüssigkeitseintrittsdruck des verschweißten Verbunds im Bereich von 75 bis 100%, bevorzugt im Bereich von 80 bis 100%, weiter bevorzugt im Bereich von 90 bis 100%, liegt, bezogen auf den Flüssigkeitseintrittsdruck der ersten porösen Membran. Dies gilt für den gesamten verschweißten Verbund, und insbesondere im Bereich der Schweißnaht.

Bevorzugt weist der verschweißte Verbund ebenfalls, insbesondere im Bereich der Schweißnaht, eine Wasserdampfdurchlässigkeit (WDD) auf, welche bei 38 °C und 90 % relativer Luftfeuchtigkeit entsprechend DIN 53122 mehr als 1000 [g/m²*d] beträgt. Ebenso weist der verschweißte Verbund bevorzugt, insbesondere im Bereich der Schweißnaht, eine Wasserdichtigkeit (LEP) auf, welche größer als 2 bar beträgt und bevorzugt im Bereich von 2 bis 5 bar, weiter bevorzugt im Bereich von 3 bis 4 bar, liegt, bestimmt nach DIN EN 20811.

Gemäß einer bevorzugten Ausführungsform wird der verschweißte Verbund zur Herstellung eines Artikels ausgewählt aus der Gruppe bestehend aus Bekleidung, Schuh, Stiefel, Schutzanzug, Zelt und Plane verwendet. Der verschweißte Verbund gemäß der vorliegenden Erfindung wird beispielsweise in Bekleidung, beispielsweise Outdoorbekleidung, Sportbekleidung wie Segel-, Kletter- oder Skikleidung, Regenbekleidung, Schutzkleidung, für Kopfbedeckungen, wie Mütze, Kappe oder für Schuhe oder Stiefel eingesetzt. Weiterhin wird der verschweißte Verbund in Zeltplanen, Schutzfolien/-planen eingesetzt.

### Beschreibung der Figur

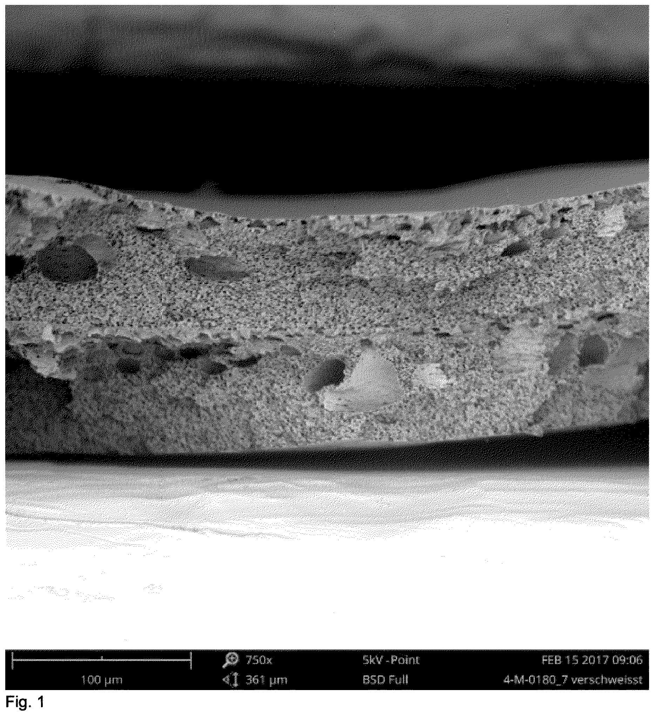

- Fig. 1: zeigt ein SEM-Bild der Querschnittsfläche des verschweißten Verbundes (Membranverbund) im Bereich der Schweißnaht.

Die vorliegende Erfindung wird weiter illustriert durch die folgenden Ausführungsformen und Kombinationen von Ausführungsformen wie angezeigt durch die entsprechenden Bezüge und Rückbezüge. Insbesondere ist zu betonen, dass jede Instanz, wo ein Bereich von Ausführungsformen angegeben ist, beispielsweise im Kontext eines Ausdrucks wie "Eine bevorzugte Ausführungsform (5), welche eine der Ausführungsformen (1) bis (4) konkretisiert", jede Ausführungsform im Bereich als explizit für den Fachmann offenbart gemeint ist, d.h. die Bedeutung dieses Ausdrucks ist vom Fachmann als synonym zu "Eine bevorzugte Ausführungsform (5), welche eine der Ausführungsformen (1), (2), (3) und (4) konkretisiert" zu verstehen.

In einer Ausführungsform (1) betrifft die Erfindung ein Verfahren zum Verschweißen von porösen Membranen, umfassend:
i) Bereitstellen einer ersten porösen Membran und einer zweiten porösen Membran;
ii) zumindest anteiliges Überlagern von erster und zweiter poröser Membran gemäß i) unter Erhalt eines zumindest anteiligen Überlagerungsbereichs;
iii) Verschweißen von erster und zweiter poröser Membran zumindest in einem Teil des Überlagerungsbereichs gemäß ii) bei einer Temperatur im Bereich von 100 bis 250 °C, bevorzugt im Bereich von 150 bis 250°C, unter Erhalt eines zumindest anteilig verschweißten Verbunds aus erster und zweiter poröser Membran, wobei das Material der ersten und der zweiten porösen Membran ein thermoplastisches Elastomer umfasst, ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere,
   wobei erste und zweite poröse Membran Poren mit einem mittleren Porendurchmesser kleiner als 2000 nm, bestimmt mittels Hg-Porosimetrie gemäß DIN 66133, aufweisen, wobei erste und zweite poröse Membran zumindest in einem Teil des Überlagerungsbereichs miteinander in Form einer Schweißnaht verbunden sind.

Eine bevorzugte Ausführungsform (2), welche Ausführungsform (1) konkretisiert, betrifft ein Verfahren, wobei das Verschweißen gemäß iii) für eine Zeitdauer im Bereich von 0,1 Sekunde bis 10 Minuten, weiter bevorzugt im Bereich von 0,5 Sekunden bis 60 Sekunden, weiter bevorzugt im Bereich von 1 bis 10 Sekunden, erfolgt.

Eine bevorzugte Ausführungsform (3), welche Ausführungsform (1) oder (2) konkretisiert, betrifft ein Verfahren, wobei das Verschweißen gemäß iii) unter einer Atmosphäre ausgewählt aus Schutzgas, insbesondere Argon oder Stickstoff, Luft oder Magerluft, weiter bevorzugt unter Luft, erfolgt.

Eine bevorzugte Ausführungsform (4), welche eine der Ausführungsformen (1) bis (3) konkretisiert, betrifft ein Verfahren, wobei das Verschweißen gemäß iii) bei einem Druck im Bereich von 1 bis 10 bar, weiter bevorzugt im Bereich von 2 bis 8 bar, weiter bevorzugt im Bereich von 3 bis 5 bar, erfolgt.

Eine bevorzugte Ausführungsform (5), welche eine der Ausführungsformen (1) bis (4) konkretisiert, betrifft ein Verfahren, wobei das Verschweißen gemäß iii) bei einer Temperatur im Bereich von 150 bis 250 °C erfolgt.

Eine bevorzugte Ausführungsform (6), welche eine der Ausführungsformen (1) bis (5) konkretisiert, betrifft ein Verfahren, wobei die erste poröse Membran eine mittlere Dicke im Bereich von 5 bis 150 µm, weiter bevorzugt im Bereich von 50 bis 100 µm, weiter bevorzugt im Bereich von 70 bis 90 µm, aufweist.

Eine bevorzugte Ausführungsform (7), welche eine der Ausführungsformen (1) bis (6) konkretisiert, betrifft ein Verfahren, wobei die erste poröse Membran Poren mit einem mittleren Porendurchmesser im Bereich von 0,001 µm bis 0,8 µm, bestimmt mittels Hg-Porosimetrie gemäß DIN 66133, aufweist.

Eine bevorzugte Ausführungsform (8), welche eine der Ausführungsformen (1) bis (7) konkretisiert, betrifft ein Verfahren, wobei das Material der ersten porösen Membran ein Polyurethan-Elastomer umfasst.

Eine bevorzugte Ausführungsform (9), welche Ausführungsform (8) konkretisiert, betrifft ein Verfahren, wobei das Material der ersten porösen Membran ein Polyurethan-Elastomer, basierend auf den folgenden Komponenten, umfasst:
- 80 bis 100 % Gewichts-% einer Mischung aus mindestens einem Diol (D1) und mindestens einem Isocyanat (11),
- 0 bis 20 % Gewichts-% mindestens einer Verbindung (C1) aufweisend mindestens zwei gegenüber Isocyanat reaktiven Gruppen; und wobei die erste poröse Membran Poren mit einem mittleren Porendurchmesser im Bereich von 0,001 µm bis 0,8 µm, bestimmt mittels Hg-Porosimetrie gemäß DIN 66133, aufweist.

Eine bevorzugte Ausführungsform (10), welche Ausführungsform (9) konkretisiert, betrifft ein Verfahren, wobei das Material der ersten porösen Membran ein weiteres Polyurethan (PU2), basierend auf mindestens einem Polyol (P2), mindestens einem Diol (D2) und mindestens einem Polyisocyanat (I2), umfasst.

Eine bevorzugte Ausführungsform (11), welche Ausführungsform (9) oder (10) konkretisiert, betrifft ein Verfahren, wobei die Verbindung (C1) ein Polyol ist, bevorzugt ausgewählt aus der Gruppe der divalenten Reste eines Oligo- oder Polysiloxans der allgemeinen Formel I ist

-[Ak-O]_{q}-Ak-Si(R₂)-[O-Si(R₂)]ₚ-O-Si(R₂)-Ak-[O-Ak]_{q'}- (I)

wobei Ak C₂-C₄ Alkylen und R C₁-C₄ Alkyl bedeutet und jeder von p, q und q' unabhängig eine Zahl im Bereich von 0-50 ist, wobei p weiter bevorzugt eine Zahl im Bereich von 1 bis 50, weiter bevorzugt im Bereich von 2 ist 50.

Eine bevorzugte Ausführungsform (12), welche eine der Ausführungsformen (9) bis (11) konkretisiert, betrifft ein Verfahren, wobei das Diol (D1) ausgewählt ist aus der Gruppe bestehend aus Ethandiol, Butandiol und Hexandiol.

Eine bevorzugte Ausführungsform (13), welche eine der Ausführungsformen (9) bis (12) konkretisiert, betrifft ein Verfahren, wobei das Polyisocyanat ausgewählt ist aus der Gruppe bestehend aus Diphenylmethandiisocyanat (MDI), Toluoldiisocyanat (TDI) und Hexamethylendiisocyanat (HDI).

Eine bevorzugte Ausführungsform (14), welche eine der Ausführungsformen (1) bis (13) konkretisiert, betrifft ein Verfahren, wobei das Material der zweiten porösen Membran ein Polyurethan-Elastomer umfasst.

Eine bevorzugte Ausführungsform (15), welche Ausführungsform (14) konkretisiert, betrifft ein Verfahren, wobei die zweite poröse Membran eine mittlere Dicke im Bereich von 5 bis 150 µm, weiter bevorzugt im Bereich von 50 bis 100 µm, weiter bevorzugt im Bereich von 70 bis 90 µm, aufweist.

Eine bevorzugte Ausführungsform (16), welche Ausführungsform (14) oder (15) konkretisiert, betrifft ein Verfahren, wobei die zweite poröse Membran Poren mit einem mittleren Porendurchmesser im Bereich von 0,001 µm bis 0,8 µm, bestimmt mittels Hg-Porosimetrie gemäß DIN 66133, aufweist.

Eine bevorzugte Ausführungsform (17), welche eine der Ausführungsformen (14) bis (16) konkretisiert, betrifft ein Verfahren, wobei das Material der porösen Membran gemäß i) und das der zweiten porösen Membran das gleiche thermoplastische Elastomer, bevorzugt das gleiche Polyurethan-Elastomer, umfassen.

Eine Ausführungsform (18) der Erfindung betrifft einen verschweißten Verbund aus einer ersten und einer zweiten porösen Membran, erhalten oder erhältlich nach dem Verfahren gemäß einer der Ausführungsformen (1) bis (17), wobei erste und zweite poröse Membran zumindest in einem Teil des Überlagerungsbereichs miteinander in Form einer Schweißnaht verbunden sind.

Eine bevorzugte Ausführungsform (19), welche Ausführungsform (18) konkretisiert, betrifft einen verschweißten Verbund, wobei die Wasserdampfdurchlässigkeit (WDD) des verschweißten Verbunds bei 38 °C und 90 % relativer Luftfeuchtigkeit entsprechend DIN 53122 mehr als 1000 [g/m²*d] beträgt.

Eine bevorzugte Ausführungsform (20), welche Ausführungsform (18) oder (19) konkretisiert, betrifft einen verschweißten Verbund, wobei die Wasserdichtigkeit (LEP) größer als 2 bar beträgt und bevorzugt im Bereich von 2 bis 5 bar, weiter bevorzugt im Bereich von 3 bis 4 bar, liegt, bestimmt nach DIN EN 20811.

Offenbart ist weiterhin eine Ausführungsform (21) betreffend einen verschweißten Verbund aus einer ersten und einer zweiten porösen Membran, wobei die erste poröse Membran eine mittlere Dicke im Bereich von 5 bis 150 µm, bevorzugt im Bereich von 50 bis 100 µm, weiter bevorzugt im Bereich von 70 bis 90 µm, aufweist.

Offenbart ist weiterhin eine Ausführungsform (22), welche Ausführungsform (21) konkretisiert, betrifft einen verschweißten Verbund, wobei die erste poröse Membran Poren mit einem mittleren Porendurchmesser kleiner als 2000 nm, weiter bevorzugt im Bereich von 0,001 µm bis 0,8 µm, bestimmt mittels Hg-Porosimetrie gemäß DIN 66133, aufweist.

Offenbart ist weiterhin eine (23), welche Ausführungsform (21) oder (22) konkretisiert, betrifft einen verschweißten Verbund, wobei das Material der ersten porösen Membran ein thermoplastisches Elastomer umfasst, weiter bevorzugt ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere, bevorzugt Polyurethan-Elastomer.

Offenbart ist weiterhin eine (24), welche eine der Ausführungsformen (21) bis (23) konkretisiert, betrifft einen verschweißten Verbund, wobei das Material der ersten porösen Membran ein Polyurethan-Elastomer, basierend auf den folgenden Komponenten:
- 80 bis 100 % Gewichts-% einer Mischung aus mindestens einem Diol (D1) und mindestens einem Isocyanat (11),
- 0 bis 20 % Gewichts-% mindestens einer Verbindung (C1) aufweisend mindestens zwei gegenüber Isocyanat reaktiven Gruppen; und wobei die erste poröse Membran Poren mit einem mittleren Porendurchmesser im Bereich von 0,001 µm bis 0,8 µm, bestimmt mittels Hg-Porosimetrie gemäß DIN 66133, aufweist.

Offenbart ist weiterhin eine Ausführungsform (25), welche Ausführungsform (24) konkretisiert, betrifft einen verschweißten Verbund, wobei das Material der ersten porösen Membran ein weiteres Polyurethan (PU2), basierend auf mindestens einem Polyol (P2), mindestens einem Diol (D2) und mindestens einem Polyisocyanat (I2), umfasst.

Offenbart ist weiterhin eine Ausführungsform (26), welche Ausführungsform (24) oder (25) konkretisiert, betrifft einen verschweißten Verbund, wobei die Verbindung (C1) ein Polyol ist, bevorzugt ausgewählt aus der Gruppe der divalenten Reste eines Oligo- oder Polysiloxans der allgemeinen Formel I ist

-[Ak-O]_{q}-Ak-Si(R₂)-[O-Si(R₂)]ₚ-O-Si(R₂)-Ak-[O-Ak]_{q'}- (I)

wobei Ak C₂-C₄ Alkylen und R C₁-C₄ Alkyl bedeutet und jeder von p, q und q' unabhängig eine Zahl im Bereich von 0-50 ist, wobei p weiter bevorzugt eine Zahl im Bereich von 1 bis 50, weiter bevorzugt im Bereich von 2 ist 50.

Offenbart ist weiterhin eine Ausführungsform (27), welche eine der Ausführungsformen (24) bis (26) konkretisiert, betrifft einen verschweißten Verbund, wobei das Diol (D1) ausgewählt ist aus der Gruppe bestehend aus Ethandiol, Butandiol und Hexandiol.

Offenbart ist weiterhin eine Ausführungsform (28), welche eine der Ausführungsformen (24) bis (27) konkretisiert, betrifft einen verschweißten Verbund, wobei das Polyisocyanat ausgewählt ist aus der Gruppe bestehend aus Diphenylmethandiisocyanat (MDI), Toluoldiisocyanat (TDI) und Hexamethylendiisocyanat (HDI).

Offenbart ist weiterhin eine Ausführungsform (29), welche eine der Ausführungsformen (24) bis (28) konkretisiert, betrifft einen verschweißten Verbund, wobei das Trägermaterial eine zweite poröse Membran umfasst, wobei das Material der zweiten porösen Membran ein thermoplastisches Elastomer umfasst, ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere, bevorzugt Polyurethan-Elastomer.

Offenbart ist weiterhin eine Ausführungsform (30), welche Ausführungsform (29) konkretisiert, betrifft einen verschweißten Verbund, wobei die zweite poröse Membran eine mittlere Dicke im Bereich von 5 bis 150 µm, weiter bevorzugt im Bereich von 50 bis 100 µm, weiter bevorzugt im Bereich von 70 bis 90 µm, aufweist.

Offenbart ist weiterhin eine Ausführungsform (31), welche Ausführungsform (29) oder (30) konkretisiert, betrifft einen verschweißten Verbund, wobei die zweite poröse Membran Poren mit einem mittleren Porendurchmesser kleiner als 2000 nm, weiter bevorzugt im Bereich von 0,001µm bis 0,8 µm, bestimmt mittels Hg-Porosimetrie gemäß DIN 66133, aufweist.

Offenbart ist weiterhin eine Ausführungsform (32), welche eine der Ausführungsformen (29) bis (31) konkretisiert, betrifft einen verschweißten Verbund, wobei das Material der ersten porösen Membran gemäß i) und das der zweiten porösen Membran das gleiche thermoplastische Elastomer, bevorzugt das gleiche Polyurethan-Elastomer, umfassen.

Offenbart ist weiterhin eine Ausführungsform (33), welche eine der Ausführungsformen (21) bis (32) konkretisiert, betrifft einen verschweißten Verbund, wobei die Wasserdampfdurchlässigkeit (WDD) bei 38 °C und 90 % relativer Luftfeuchtigkeit entsprechend DIN 53122 mehr als 1000 [g/m²*d] beträgt.

Offenbart ist weiterhin eine Ausführungsform (34), welche eine der Ausführungsformen (21) bis (33) konkretisiert, betrifft einen verschweißten Verbund, wobei die Wasserdichtigkeit (LEP) größer als 2 bar beträgt und bevorzugt im Bereich von 2 bis 5 bar, weiter bevorzugt im Bereich von 3 bis 4 bar, liegt, bestimmt nach DIN EN 20811.

Eine Ausführungsform (35) der Erfindung betrifft die Verwendung eines verschweißten Verbunds gemäß einer der Ausführungsformen (18) bis (20) zur Herstellung eines Artikels ausgewählt aus der Gruppe bestehend aus Bekleidung, Schuh, Stiefel, Schutzanzug, Zelt und Plane.

### Angeführte Literatur

US 3,953,566,
US 3,962,153
US 5,562,977
JP 5005276
US 2015/0230563
"Kunststoffhandbuch, 7, Polyurethane", Carl Hanser Verlag, 3. Auflage 1993, Sektion 3.1.
"Kunststoffhandbuch" 7, Carl Hanser Verlag, 1966, Seiten 103-113.
EP 3100849 A1
GB 2496244 A
WO 2016/061321 A1
EP 2476324 A1

### Beispiele

Die nachfolgenden Beispiele dienen der Veranschaulichung der Erfindung, sind aber nicht beschränkend im Hinblick auf den Gegenstand der Erfindung.

### 1. Herstellung des Polyurethans (Hartphase)

### 1.1 Substanzen

Die folgenden Substanzen wurden eingesetzt:

| Abkürzung | Verbindung | Molekulargewicht [g/mol] |
|---|---|---|
| Iso 1 | 4,4'-Methylendiphenylendiisocyanat | 250,26 g/mol |
| KV 2 | 1,4-Butandiol | 90,12 g/mol |

### 1.2 Synthese des Polyurethans (Hartphase Typ 1)

In einer 2l Dose wurde der Kettenverlängerer KV2 verteilt. Anschließend wurde Isocyanat Iso1 unter leichtem Rühren zugegeben und die Reaktion wurde vorsichtig auf 70°C unter Luft erwärmt. Die Mischung wurde dann gerührt bis eine Temperatur von 90°C erreicht war. Die Reaktionsmischung wurde in eine flache Schale gegossen und für 10 Minuten bei 125°C auf einer Heizplatte erwärmt. Die erhaltene Schwarte wurde im Heizofen bei 80°C 15 Minuten lang getempert.

Das erhaltene Material wurde in Stücke geschnitten und zu einem Granulat gemahlen.

### 1.3 Zusammensetzung des erzeugten Materials

| Isocyanat (Iso) | Menge Iso [g] | Diol (KV) | Menge KV [g] | Gesamtmenge [g] |
|---|---|---|---|---|
| Iso 1 | 441,1 | KV 2 | 158,9 | 600 |

### 2. Herstellung der Membranen

### 2.1 Abkürzungen und Verbindungen:

- NMP: N-Methylpyrrolidon
- GLY: Glycerin
- LEP: Flüssigkeitseintrittsdruck
- WDD: Wasserdampfpermeabilität

### 2.2 Testmethoden

Der Flüssigkeitseintrittsdruck der Membranen wurde gemäß DIN EN 20811 unter Verwendung einer Druckzelle mit einem Durchmesser von 60 mm mit ultrareinem Wasser (salzfreies Wasser, gefiltert durch ein Millipore UF-System) bis zu 4,0 bar (40 000 mm Wassersäule) bestimmt. Der Flüssigkeitseintrittsdruck LEP ist definiert als der Druck, bei welchem das flüssige Wasser beginnt, die Membran zu permeieren. Ein hoher LEP erlaubt es der Membran, einer hohen Wassersäule (flüssig) standzuhalten.

Die Wasserdampfpermeabilität (water vapour permeability, WDD) wurde mit einem Cup-Verfahren bei 38 °C und 90 % relativer Feuchtigkeit gemäß DIN 53122 bestimmt. Hohe WDD-Werte waren erwünscht und erlaubten hohe Flussraten des Wasserdampfes. Zugversuche für E-Modul und Reißdehnung wurden gemäß DIN 53455/ISO 527 durchgeführt.

Zugeigenschaften wurden entsprechend ISO 527-3 charakterisiert.

### 2.3 Herstellung poröser Membran mit N-Methylpyrrolidon als Polymer-Lösungsmittel

In einem Dreihalskolben mit einem Magnetrührer wurden 81 ml N-Methylpyrrolidon 1, 10 g Glycerin als zweites Additiv und 19 g TPU-Polymer gemäß 1. zusammengegeben. Die Mischung wurde unter leichtem Rühren auf 60°C erwärmt, bis eine homogene klare viskose Lösung vorlag, welche über Nacht bei Raumtemperatur entgast wurde. Es wurden klare und transparente Polymerlösungen erhalten.

Anschließend wurde die Polymerlösung wieder für 2h auf 60°C erwärmt und dann auf einer Glasplatte mit einem Gußmesser (150 microns) bei 60°C verteilt, unter Verwendung einer Erichsen Beschichtungsmaschine bei einer Geschwindigkeit von 5 mm/min. Der Membranfilm wurde für 30 Sekunden ruhen gelassen, anschließend folgte Immersion in einem Wasserbad bei 25°C für 10 Minuten. Nach Ablösung der Membran von der Glasplatte wurde die Membran für 12 Stunden in ein Wasserbad überführt. Nach mehreren Waschschritten mit Wasser wurde die Membran bis zur Charakterisierung bzgl. LEP und WDD feucht gelagert. Tabelle 1 fasst die Membraneigenschaften zusammen.

**Tabelle 1: Zusammensetzungen und Eigenschaften der erzeugten Membranen; Dicke in [µm], LEP in [bar], WDD in [g/m²*d], E-Modul [MPa], Reißdehnung [%], Tg in [°C].**

| | TPU | Tg | Dicke | LEP | WDD |
|---|---|---|---|---|---|
| Beispiel 1 | BUMDI | 106 | 80 | 4 | 1220 |

### 3. Verschweißen

Zwei Membranen gemäß Sektion 1, Beispiel 1 wurden bei 120°C und einem Druck von 3 bar für einen Zeitraum von drei Sekunden unter Luft verschweißt, wobei eine halbautomatische Impulsschweißmaschine (Folienschweißgerät) des Typs HPL 630 A der Firma Hawo Gerätebau GmbH, D-74847 Obrigheim eingesetzt wurde und ein verschweißter Membranverbund mit einer Schweißnaht erhalten wurde, welche eine Breite von 3,5 mm aufwies. Der verschweißte Membranverbund hatte im Bereich der Schweißnaht eine Dicke von 120 µm und wurde in diesem Bereich bzgl. LEP und WDD charakterisiert. Tabelle 3 zeigt die Ergebnisse der Charakterisierung im Vergleich für die Membran gemäß Beispiel 1 aus Sektion 2 und den verschweißten Membranverbund.

**Table 3: Zusammensetzung und Eigenschaften der Membran gemäß Beispiel 1 und des verschweißten Membranverbunds; Dicke in [µm], LEP in [bar], WDD in [g/m²*d] Tg in [°C].**

| | TPU | Tg | Dicke | LEP | WDD |
|---|---|---|---|---|---|
| Beispiel 1 | BUMDI | 106 | 80 | 4 | 1220 |
| verschweißter Membranverbund | BUMDI | 106 | 120 | 4 | 1220 |

Der verschweißte Membranverbund wies die gleiche gute Wasserdampfpermabilität und den gleichen hohen Flüssigkeitseintrittsdruck wie die unverschweißte Membran gemäß Beispiel 1 auf. Bei Bestimmung der Zugeigenschaften wies die Naht des verschweißten Membranverbunds eine Bruchspannung von 1.5 MPa mit einer Bruchdehnung von 8 % auf.

Der verschweißte Membranverbund wurde ebenfalls mittels Rasterelektronenmikroskopie untersucht (scanning electron microscopy, SEM). Fig. 1 ist ein SEM-Bild der Querschnittsfläche des Membranverbunds im Bereich der Schweißnaht.

## Patentansprüche

1. Verfahren zum Verschweißen von porösen Membranen, umfassend:
i) Bereitstellen einer ersten porösen Membran und einer zweiten porösen Membran;
ii) zumindest anteiliges Überlagern von erster und zweiter poröser Membran gemäß i) unter Erhalt eines zumindest anteiligen Überlagerungsbereichs;
iii) Verschweißen von erster und zweiter poröser Membran zumindest in einem Teil des Überlagerungsbereichs gemäß ii) bei einer Temperatur im Bereich von 100 bis 250 °C unter Erhalt eines zumindest anteilig verschweißten Verbunds aus erster und zweiter poröser Membran;
wobei das Material der ersten und der zweiten porösen Membran ein thermoplastisches Elastomer umfasst, ausgewählt aus der Gruppe bestehend aus Polyurethan-, Polyester-, Polyetherester-, Polyesterester-, Polyamid-, Polyetheramid-, Polystyrol-, Ethylenvinylacetat-Elastomer und Mischungen von zwei oder mehr dieser Elastomere,
wobei erste und zweite poröse Membran Poren mit einem mittleren Porendurchmesser kleiner als 2000 nm, bestimmt mittels Hg-Porosimetrie gemäß DIN 66133, aufweisen, wobei erste und zweite poröse Membran zumindest in einem Teil des Überlagerungsbereichs miteinander in Form einer Schweißnaht verbunden sind.

2. Verfahren nach Anspruch 1, wobei das Verschweißen gemäß iii) für eine Zeitdauer im Bereich von 0,1 Sekunde bis 10 Minuten, bevorzugt im Bereich von 0,5 Sekunden bis 60 Sekunden, weiter bevorzugt im Bereich von 1 bis 10 Sekunden, erfolgt.

3. Verfahren nach einem der Ansprüche 1 oder 2, wobei das Verschweißen gemäß iii) unter einer Atmosphäre ausgewählt aus Schutzgas, insbesondere Argon oder Stickstoff, Luft oder Magerluft, bevorzugt unter Luft, erfolgt.

4. Verfahren nach einem der Ansprüche 1 bis 3, wobei das Verschweißen gemäß iii) bei einem Druck im Bereich von 1 bis 10 bar, bevorzugt im Bereich von 2 bis 8 bar, weiter bevorzugt im Bereich von 3 bis 5 bar, erfolgt.

5. Verfahren nach einem der Ansprüche 1 bis 4, wobei das Verschweißen gemäß iii) bei einer Temperatur im Bereich von 150 bis 250 °C erfolgt.

6. Verfahren nach einem der Ansprüche 1 bis 5, wobei die erste poröse Membran eine mittlere Dicke im Bereich von 5 bis 150 µm, bevorzugt im Bereich von 50 bis 100 µm, weiter bevorzugt im Bereich von 70 bis 90 µm, aufweist.

7. Verfahren nach einem der Ansprüche 1 bis 6, wobei die erste poröse Membran Poren mit einem mittleren Porendurchmesser im Bereich von 0,001 µm bis 0,8 µm, bestimmt mittels Hg-Porosimetrie gemäß DIN 66133, aufweist.

8. Verfahren nach Anspruch 1, wobei das Material der ersten porösen Membran ein Polyurethan-Elastomer, basierend auf den folgenden Komponenten, umfasst:
- 80 bis 100 % Gewichts-% einer Mischung aus mindestens einem Diol (D1) und mindestens einem Isocyanat (11),
- 0 bis 20 % Gewichts-% mindestens einer Verbindung (C1) aufweisend mindestens zwei gegenüber Isocyanat reaktiven Gruppen; und
wobei die poröse Membran Poren mit einem mittleren Porendurchmesser im Bereich von 0,001µm bis 0,8 µm, bestimmt mittels Hg-Porosimetrie gemäß DIN 66133, aufweist.

9. Verfahren nach Anspruch 1, wobei die zweite poröse Membran eine mittlere Dicke im Bereich von 5 bis 150 µm, bevorzugt im Bereich von 50 bis 100 µm, weiter bevorzugt im Bereich von 70 bis 90 µm, aufweist und/oder Poren mit einem mittleren Porendurchmesser t im Bereich von 0,001µm bis 0,8 µm, bestimmt mittels Hg-Porosimetrie gemäß DIN 66133, aufweist.

10. Verfahren nach Anspruch 9, wobei das Material der ersten porösen Membran gemäß i) und das der zweiten porösen Membran das gleiche thermoplastische Elastomer, bevorzugt das gleiche Polyurethan-Elastomer, umfassen.

11. Verschweißter Verbund aus einer ersten und einer zweiten porösen Membran, erhalten oder erhältlich nach dem Verfahren gemäß einem der Ansprüche 1 bis 10, wobei erste und zweite poröse Membran zumindest in einem Teil des Überlagerungsbereichs miteinander in Form einer Schweißnaht verbunden sind.

12. Verschweißter Verbund nach Anspruch 11, wobei die Wasserdampfdurchlässigkeit (WDD) bei 38 °C und 90 % relativer Luftfeuchtigkeit entsprechend DIN 53122 mehr als 1000 [g/m²*d] beträgt und/oder die Wasserdichtigkeit (LEP) größer als 2 bar beträgt und bevorzugt im Bereich von 2 bis 5 bar, weiter bevorzugt im Bereich von 3 bis 4 bar, liegt, bestimmt nach DIN EN 20811.

13. Verwendung eines verschweißten Verbunds gemäß Anspruch 11 oder 12 zur Herstellung eines Artikels ausgewählt aus der Gruppe bestehend aus Bekleidung, Schuh, Stiefel, Schutzanzug, Zelt und Plane.

## Claims

1. A process for welding porous membranes, comprising:
i) providing a first porous membrane and a second porous membrane;
ii) at least partially superimposing first and second porous membrane as per i) to obtain an at least partial superimposition region;
iii) welding first and second porous membrane at least in a portion of the superimposition region as per ii) at a temperature in the range from 100 to 250°C to obtain an at least partially welded composite of first and second porous membrane;
wherein the material of the first and the second porous membrane comprises a thermoplastic elastomer selected from the group consisting of polyurethane elastomer, polyester elastomer, polyetherester elastomer, polyesterester elastomer, polyamide elastomer, polyetheramide elastomer, polystyrene elastomer, ethylene-vinyl acetate elastomer and mixtures of two or more of these elastomers,
wherein first and second porous membrane have pores having an average pore diameter of less than 2000 nm, determined by means of Hg porosimetry in accordance with DIN 66133, wherein first and second porous membrane are bonded together in the form of a weld seam at least in a portion of the superimposition region.

2. The process according to claim 1, wherein the welding as per iii) is effected for a period of time in the range from 0.1 seconds to 10 minutes, preferably in the range from 0.5 seconds to 60 seconds, more preferably in the range from 1 to 10 seconds.

3. The process according to either of claims 1 and 2, wherein the welding as per iii) is effected under an atmosphere selected from protective gas, especially argon or nitrogen, air or lean air, preferably under air.

4. The process according to any of claims 1 to 3, wherein the welding as per iii) is effected at a pressure in the range from 1 to 10 bar, preferably in the range from 2 to 8 bar, more preferably in the range from 3 to 5 bar.

5. The process according to any of claims 1 to 4, wherein the welding as per iii) is effected at a temperature in the range from 150 to 250°C.

6. The process according to any of claims 1 to 5, wherein the first porous membrane has an average thickness in the range from 5 to 150 µm, preferably in the range from 50 to 100 µm, more preferably in the range from 70 to 90 µm.

7. The process according to any of claims 1 to 6, wherein the first porous membrane has pores having an average pore diameter in the range from 0.001 µm to 0.8 µm, determined by means of Hg porosimetry in accordance with DIN 66133.

8. The process according to claim 1, wherein the material of the first porous membrane comprises a polyurethane elastomer based on the following components:
- 80% to 100% by weight of a mixture of at least one diol (D1) and at least one isocyanate (11),
- 0 to 20% by weight of at least one compound (C1) having at least two isocyanate-reactive groups; and
wherein the porous membrane has pores having an average pore diameter in the range from 0.001 µm to 0.8 µm, determined by means of Hg porosimetry in accordance with DIN 66133.

9. The process according to claim 1, wherein the second porous membrane has an average thickness in the range from 5 to 150 µm, preferably in the range from 50 to 100 µm, more preferably in the range from 70 to 90 µm, and/or has pores having an average pore diameter t in the range from 0.001 µm to 0.8 µm, determined by means of Hg porosimetry in accordance with DIN 66133.

10. The process according to claim 9, wherein the material of the first porous membrane as per i) and that of the second porous membrane comprise the same thermoplastic elastomer, preferably the same polyurethane elastomer.

11. A welded composite of a first and a second porous membrane, obtained or obtainable by the process according to any of claims 1 to 10, wherein first and second porous membrane are bonded together in the form of a weld seam at least in a portion of the superimposition region.

12. The welded composite according to claim 11, wherein the water vapor permeability (WVP) at 38°C and 90% relative humidity according to DIN 53122 is more than 1000 [g/m²*d] and/or the watertightness (LEP) is greater than 2 bar and preferably is in the range from 2 to 5 bar, more preferably in the range from 3 to 4 bar, determined according to DIN EN 20811.

13. The use of a welded composite according to claim 11 or 12 for the production of an article selected from the group consisting of clothing, shoes, boots, protective clothing, tents and tarpaulins.

## Revendications

1. Procédé de soudage de membranes poreuses, comprenant :
i) la mise à disposition d'une première membrane poreuse et d'une deuxième membrane poreuse ;
ii) superposition au moins partielle de la première et de la deuxième membrane poreuse selon i) avec obtention d'une zone de superposition au moins partielle ;
iii) soudage de la première et de la deuxième membrane poreuse au moins dans une partie de la zone de superposition selon ii) à une température dans la plage de 100 à 250°C avec obtention d'un composite au moins partiellement soudé, constitué par la première et la deuxième membrane poreuse ;
le matériau de la première et de la deuxième membrane poreuse comprenant un élastomère thermoplastique, choisi dans le groupe des élastomères de polyuréthane, de polyester, de polyétherester, de polyesterester, de polyamide, de polyétheramide, de polystyrène, d'éthylène-acétate de vinyle et les mélanges de deux de ces élastomères ou plus,
la première et la deuxième membrane poreuse présentant des pores présentant un diamètre moyen de pore inférieur à 2000 nm, déterminé par porosimétrie au Hg selon la norme DIN 66133, la première et la deuxième membrane poreuse étant reliées l'une à l'autre sous forme d'un joint de soudure au moins dans une partie de la zone de superposition.

2. Procédé selon la revendication 1, le soudage selon iii) ayant lieu pour une période dans la plage de 0,1 seconde à 10 minutes, de préférence dans la plage de 0,5 seconde à 60 secondes, plus préférablement dans la plage de 1 à 10 secondes.

3. Procédé selon l'une des revendications 1 ou 2, le soudage selon iii) ayant lieu sous une atmosphère choisie parmi un gaz de protection, en particulier l'argon ou l'azote, l'air ou l'air maigre, de préférence sous air.

4. Procédé selon l'une des revendications 1 à 3, le soudage selon iii) ayant lieu à une pression dans la plage de 1 à 10 bars, de préférence dans la plage de 2 à 8 bars, plus préférablement dans la plage de 3 à 5 bars.

5. Procédé selon l'une des revendications 1 à 4, le soudage selon iii) ayant lieu à une température dans la plage de 150 à 250°C.

6. Procédé selon l'une des revendications 1 à 5, la première membrane poreuse présentant une épaisseur moyenne dans la plage de 5 à 150 um, de préférence dans la plage de 50 à 100 um, plus préférablement dans la plage de 70 à 90 µm.

7. Procédé selon l'une des revendications 1 à 6, la première membrane poreuse présentant des pores présentant un diamètre moyen de pore dans la plage de 0,001 um à 0,8 um, déterminé par porosimétrie au Hg selon la norme DIN 66133.

8. Procédé selon la revendication 1, le matériau de la première membrane poreuse comprenant un élastomère de polyuréthane basé sur les composants suivants :
- 80 à 100% en poids d'un mélange d'au moins un diol (D1) et d'au moins un isocyanate (I1),
- 0 à 20% en poids d'au moins un composé (C1) présentant au moins deux groupes réactifs par rapport à isocyanate,
la membrane poreuse présentant des pores présentant un diamètre moyen de pore dans la plage de 0,001 um à 0,8 um, déterminé par porosimétrie au Hg selon la norme DIN 66133.

9. Procédé selon la revendication 1, la deuxième membrane poreuse présentant une épaisseur moyenne dans la plage de 5 à 150 um, de préférence dans la plage de 50 à 100 um, plus préférablement dans la plage de 70 à 90 um et/ou des pores présentant un diamètre moyen de pore t dans la plage de 0,001 um à 0,8 um, déterminé par porosimétrie au Hg selon la norme DIN 66133.

10. Procédé selon la revendication 9, le matériau de la première membrane poreuse selon i) et celui de la deuxième membrane poreuse comprenant le même élastomère thermoplastique, de préférence le même élastomère de polyuréthane.

11. Composite soudé constitué par une première et une deuxième membrane, obtenu ou pouvant être obtenu selon le procédé selon l'une des revendications 1 à 10, la première et la deuxième membrane étant reliées l'une à l'autre sous la forme d'un joint de soudure au moins dans une partie de la zone de superposition.

12. Composite soudé selon la revendication 11, la perméabilité à la vapeur d'eau (WDD) à 38°C et à une humidité relative de 90% selon la norme DIN 53122 étant supérieure à 1000 [g/m²*d] et/ou l'étanchéité à l'eau (LEP) étant supérieure à 2 bars et de préférence située dans la plage de 2 à 5 bars, plus préférablement dans la plage de 3 à 4 bars, déterminée selon la norme DIN EN 20811.

13. Utilisation d'un composite soudé selon la revendication 11 ou 12 pour la fabrication d'un article choisi dans le groupe constitué par les vêtements, les chaussures, les bottes, les vêtements de protection, les tentes et les bâches.
